# EUROPÄISCHE PATENTSCHRIFT

(11) **EP 2 447 028 B1**
(45) Veröffentlichungstag und Bekanntmachung des Hinweises auf die Patenterteilung: **25.01.2017**
(21) Anmeldenummer: 11181232.7
(22) Anmeldetag: 14.09.2011
(51) Int. Cl.: B29B 17/02, B29B 13/10, B29C 47/68

(54) **Verfahren zur Reinigung von thermoplastischen Polymeren**
Method for cleaning thermoplastic polymers
Procédé de purification de polymères thermoplastiques

(30) Priorität: 26.10.2010 DE 102010042967
(43) Veröffentlichungstag der Anmeldung: 02.05.2012
(73) Patentinhaber: Krones AG, 93073 Neutraubling (DE)
(72) Erfinder: Friedlaender, Thomas, 93049 Regensburg (DE); Wasmuht, Klaus, 91792 Ellingen (DE); Zacharias, Jörg, 93096 Köfering (DE); Mayr, Stephan, 93051 Regensburg (DE)
(74) Vertreter: Grünecker Patent- und Rechtsanwälte PartG mbB

(56) Entgegenhaltungen:
- DE-A1-102004 022 776
- JP-A- 8 156 072
- KR-A- 20070 119 316
- US-A- 4 849 113
- US-A1- 2002 079 610
- US-A1- 2006 021 949
- BLEDZKI A K ET AL: "DEVICES FOR FILTRATION OF MOLTEN PLASTICS", INTERNATIONAL POLYMER SCIENCE AND TECHNOLOGY, RAPRA TECHNOLOGY, SHREWABURY, GB, Bd. 23, Nr. 10, 1. Januar 1996 (1996-01-01), Seiten T/103-T/108, XP000689656, ISSN: 0307-174X
- BARICH G ET AL: "ZWISTUFIGE SCHMELZEFILTRATION", KUNSTOFFE INTERNATIONAL, CARL HANSER VERLAG, MUNCHEN, DE, Bd. 86, Nr. 9, 1. September 1996 (1996-09-01), XP000627896, ISSN: 0023-5563

## Beschreibung

Die Erfindung bezieht sich auf ein Verfahren zur Reinigung von thermoplastischen Polymeren nach dem Oberbegriff des Anspruchs 1, und insbesondere auf die Reinigung von zu recycelnden Verpackungsmaterialien aus thermoplastischen Polymeren.

Vor dem Hintergrund der Knappheit von fossilen Rohstoffen werden Verpackungsmaterialien, die größtenteils aus auf Erdöl basierenden Polymeren hergestellt sind, heutzutage vermehrt wiederverwertet. Beispiele thermoplastischer Polymere sind unter anderem Polyester, Polyolefine, Polystyrole, Polyamide oder Polycarbonate, insbesondere PET oder Copolymere davon. Beim Recyclingprozess werden die Verpackungsmaterialen nach deren Verwendung im allgemeinen gesammelt, durch mechanische und physikalische Trennverfahren nach Materialtypen sortiert, dann in kleinere Stücke, den sogenannten Polymerflakes, zerschnitten und gewaschen. Diese Polymerflakes stellen ein Zwischenprodukt beim Recyclingprozess dar und werden anschließend über einen kontinuierlichen Extrusions- und Granulierungsvorgang wieder in Polymerpellets überführt, die dann erneut in beliebige Produkte wie zum Beispiel Verpackungsmaterialien umgeformt werden können.

Die anfallenden Polymerflakes sind aber im allgemeinen verunreinigt, d.h. enthalten Fremdstoffe, die üblicherweise während des Extrusions- und Granulierungsvorgang abgetrennt werden, um die Qualität der resultierenden Polymerpellets zu erhöhen, so dass diese als Rohmaterial für verschiedene hochwertige Produkte dienen können.

Unter Fremdstoffe sind insbesondere partikuläre Verunreinigungen im Größenbereich von einigen mm bis µm zu verstehen, die mit den vorhergehenden mechanischen und physikalischen Reinigungsprozessen nicht abgetrennt werden konnten. Bei Flakes aus PET Flaschen sind dies vor allem Feststoffe wie Sand, Steine, Glas, Metalle, Holz, Gummi, Keramik, .....

Herkömmlicherweise werden diese Partikel innerhalb des Extrusionsprozesses mechanisch aus der Polymerschmelze gefiltert, indem die Schmelze über einen Filter geleitet wird, der sich im Inneren der Extrudiervorrichtung befindet und der die Partikel zurückhält.

Dabei besteht das Problem, dass sich der Filter mit fortlaufendem Betrieb der Extrudiervorrichtung mit Polymer zusetzt / verblockt, was zu einem verminderten Durchfluss der Polymerschmelze führt. Dies bedingt einen Druckaufbau vor dem Filter bzw. Druckverlust nach dem Filter, was sich in Staudrücken von bis zu 150 bar äußert. Dies wiederum bedeutet das Betriebsende für den Filter und bedingt eine Rückspülung, Reinigung oder einen Austausch des Filters. Eine Ursache für die Zusetzung bzw. Verblockung des Filters liegt in Inhomogenitäten in der Polymerschmelze, die Bestandteile besitzen kann, die einen relativ hohen Schmelzpunkt besitzen, so dass die Temperatur der Polymerschmelze so gering ist, dass diese Bestandteile sich als feste Polymermasse auf dem Filtermittel abscheiden.

Aus dem Stand der Technik ist bekannt, über eine Erhöhung der Temperatur der Extrudiervorrichtung eine Reinigung zu erzielen, da dies ein Rückführen der abgeschiedenen Polymerbestandteile, die sich auf dem Filter befinden, in die Schmelze bedingt. Außerdem hat eine Schmelze bei höheren Temperaturen eine geringere Viskosität und lässt sich besser filtern. Dies hat aber den Nachteil, dass sich gleichzeitig auch die Temperatur der Polymerschmelze über den gesamten Extruderbereich erhöht, was bei temperaturempfindlichen Polymeren wie zum Beispiel PET unerwünschte Abbaureaktionen mit sich bringt, und somit die Qualität der resultierenden Polymerpellets erniedrigt.

Insgesamt haben die im Stand der Technik offenbarten Vorrichtungen und Verfahren den Nachteil, dass der Filter zum Abtrennen von Fremdstoffen in der Polymerschmelze schnell verblockt bzw. verstopft, so dass dieser oft ausgetauscht werden muss. Weiter lassen die Systeme aus dem Stand der Technik keine Filterreinigung bei laufendem Betrieb ohne Beeinträchtigung der Qualität des resultierenden Polymerprodukts zu, d.h. die Verfahren aus dem Stand der Technik müssen insbesondere bei inhomogenen Polymeredukten häufig gewartet wer-den.

Die DE 199 12 433 A1 zeigt eine Filtervorrichtung zur Filtration von Kunststoffschmelzen, die einen Wärmetauscher umfasst. Die DE 11 51 927 B offenbart eine Schneckenspritzmaschine mit einem Sieb an der Austrittsstelle, wobei das Sieb beheizbar ist. Die EP 0 960 716 A1 zeigt eine Vorrichtung zur Filtration von thermoplastischen Schmelzen für Extruder. Die WO 2008/153691 A1 offenbart ein Extrusionssystem, das einen Drucksensor verwendet.

Die JP 5 069 470 A und JP 11 156 920 A zeigen Verfahren zum Herstellen eines extrudierten Films, die Filter verwenden.

Die Dokumente DE 10 2004 022776 A1; BLEDZKI A. K. ET AL.: "DEVICES FOR FILTRATION OF MOLTEN PLASTICS", INTERNATIONAL POLYMER SCIENCE AND TECHNOLOGY, RAPPA TECHNOLOGY, SHREWABURY, GB, Bd. 23, Nr. 10, 1. Januar 1996 (1996-01-01), Seiten T/103-T/108, XP000689656, ISSN: 0307-174X; BARICH G. ET AL: "ZWEISTUFIGE SCHMELZFILTRATION", KUNSTSTOFFE INTERNATIONAL, CARL HANSER VERLAG, MÜNCHEN, DE, Bd. 86, Nr. 9, 1. September 1996 (1996-09-01), XP000627896, ISSN: 0023-5563; JP 8 156072 A; KR 2007 0119316 A; US 4,849,113 und US 2006/0021949 A1 beschreiben auch Vorrichtungen und Verfahren zur Reinigung von thermoplastischen Polymeren.

Das Dokument US2002/0079610 A1 beschreibt ein Verfahren
nach dem Oberbegriff von Anspruch 1, wobei ein Filtermittel auf eine
Temperatur erhitzt wird, die höher als die der Polymerschmelze ist.

Somit liegt die Aufgabe der Erfindung in der Bereitstellung eines Verfahrens zur Reinigung von thermoplastischen Polymeren, bei denen Fremdstoffe effektiv und wartungsarm abgetrennt werden können, und wobei die Qualität des resultierenden Polymerprodukts auch bei Inhomogenitäten im Polymeredukt nicht erniedrigt wird.

Die oben beschriebenen Aufgaben werden mit einem Verfahren nach Anspruch 1 erfindungsgemäß dadurch gelöst, dass das Filtermittel zeitweise auf eine Temperatur erhitzt wird, die höher als die der Polymerschmelze selbst ist, wobei das Erhitzen des Filtermittels nur über eine begrenzte Zeitdauer durchgeführt wird, so dass das Filtermittel (12) nicht permanent auf eine Temperatur erhitzt wird, die höher ist als die der Polymerschmelze (4).

Durch ein solches Verfahren ist es
möglich, effektiv und wartungsarm Fremdstoffe aus Polymerschmelzen zu filtern, sowie gleichzeitig eine hohe Qualität des Polymerprodukts auch bei Inhomogenitäten im Polymeredukt zu gewährleisten.

In einer bevorzugten Ausführungsform des Verfahrens ist die Differenz der Temperatur der Polymerschmelze zu der Temperatur des Filtermittels im Bereich von 110 °C bis 40 °C, bevorzugt von 90 °C bis 50 °C. Durch eine solche Einstellung der Temperaturdifferenz kann eine effektive Reinigung des Filtermittels ohne Beeinträchtigung der Qualität des resultierenden Polymerprodukts erfolgen, da der zusätzliche Energieeintrag in die Polymerschmelze sehr gering ist.

Weiter ist bevorzugt, dass die Temperatur der Polymerschmelze im Bereich von 250 °C bis 300 °C, bevorzugt von 270 °C bis 290 °C, liegt, und das Filtermittel auf eine Temperatur im Bereich von 300 °C bis 360 °C, bevorzugt von 320 °C bis 350 °C, erhitzt wird. Diese Temperaturen sind insbesondere beim Recyceln von PET Flakes bevorzugt, da sonst ein nicht zu vernachlässigender Abbau des PET's resultiert, was eine Verringerung der intrinsischen Viskosität des resultierenden PET-Recyclats und einen erhöhten Acetaldehydwert bedingt. In einer weiteren bevorzugten Ausgestaltung beträgt der Massedruck der Polymerschmelze vor dem Filterschritt weniger als 150 bar, bevorzugt weniger als 125 bar, besonders bevorzugt weniger als 100 bar. Dadurch kann gewährleistet werden, dass die Haltbarkeit des Filtermittels, sowie die Durchsatzgeschwindigkeit der Polymerschmelze in einem akzeptablen Bereich liegt, was einen besonders effektiven und wartungsarmen Verfahrensverlauf gewährleistet.

Das Erhitzen des Filtermittels auf eine Temperatur, die höher als die der Polymerschmelze ist, wird nur über eine begrenzte Zeitdauer, und bevorzugt intervallweise, durchgeführt. Insbesondere bevorzugt ist, dass die Zeitdauer des Erhitzens des Filtermittels auf eine Temperatur, die höher als die der Polymerschmelze ist, weniger als 30 min, bevorzugt weniger als 10 min, besonders bevorzugt weniger als 2 min, beträgt. Weiterhin ist günstig, dass die Heizintervalle mehr als 1 Stunde, bevorzugt mehr als 5 Stunden, bevorzugt mehr als 10 Stunden, betragen. Durch eine solche nicht-kontinuierliche Verfahrensausgestaltung kann der Temperatureintrag in die Polymerschmelze, der nötig ist, um eine Reinigung des Filtermittels zu erzielen, weiter minimiert werden, und somit eine besonders gute Qualität des resultierenden Polymerprodukts erzielt werden.

Weiter ist bevorzugt, dass das Verfahren einen Schritt des Regelns der Temperatur und/oder der Heizdauer und/oder des Heizintervalls des Filtermittels umfasst, wobei der Regelparameter mindestens einer ist, der ausgewählt aus der Gruppe, umfassend die Temperatur der Polymerschmelze vor dem Filterschritt, die Temperatur der Polymerschmelze nach dem Filterschritt, den Massedruck der Polymerschmelze vor dem Filterschritt und den Massedruck der Polymerschmelze nach dem Filterschritt, ist. Durch diesen Regelungsschritt kann insbesondere die Temperatur beim Austritt aus dem Filtermittel in bestimmter Relation zum Schmelzpunkt des Polymers eingestellt werden, um die nachfolgenden Kühl- und Kristallisationsprozesse nicht zu behindern. Weiter ist durch das zunehmende Zusetzen des Filtermittels ansteigender Druck auf der Unfiltratseite, d. h. auf der Seite vor dem Filtermittel, zu beobachten. Durch die Messung des Massedrucks vor und/oder nach dem Filtermittel, und das Heranziehen dieser Messgröße als Regelparameter für die Temperatureinstellung des Filtermittels über das zweite Heizelement kann gezielt eine Temperatur oberhalb der Gefahrenzone (d. h. eine Temperatur bei der Inhomogenitäten auftreten) eingestellt werden. Begrenzt wird diese Regelung nur durch die zulässige Maximaltemperatur, die die Schmelze erreichen darf, und die bevorzugt über eine parallele Temperaturmessung ermittelt werden kann.

Alternativ oder zusätzlich zu der Messung/Regelung über die oben genannten Regelparameter ist es insbesondere bevorzugt, dass die Temperatur des Filtermittels während des Verfahrens geregelt wird, wobei der Regelparameter mindestens einer ist, der ausgewählt ist aus der Gruppe, umfassend die Schmelz- und/oder Glasübergangstemperatur des Polymeredukts, die intrinsische Viskosität des Polymeredukts, die Schmelz- und/oder Glasübergangstemperatur des Polymerprodukts und die intrinsische Viskosität des Polymerprodukts. Über eine solche Regelung mittels dieser Regelparameter ist zusätzlich eine Feinabstimmung des erfindungsgemäßen Verfahrens möglich, so dass das Verfahren bezüglich der Qualität des Polymerprodukts weiter optimierbar ist.

Das erfindungsgemäße Verfahren kann in einer Vorrichtung durchgeführt werden, die im Folgenden beschrieben wird: Diese Vorrichtung zur Reinigung von thermoplastischen Polymeren umfasst ein Mittel zur Herstellung und Beförderung einer Polymerschmelze, wobei das Mittel eine erste Heizeinheit und ein Filtermittel umfasst, und wobei das Filtermittel eine zweite Heizeinheit umfasst.

Durch das Bereitstellen der zweiten, separaten Heizeinheit ist eine direkte und zielgerichtete Heizung des Filtermittels auf eine Temperatur möglich, die höher ist als die der Polymerschmelze, wodurch effektiv verhindert wird, dass sich Polymermaterial auf dem Filtermittel abscheidet und zu einer Verblockung des Filtermittels führt. Weiter ist durch eine zweite, separate Heizeinheit eine schnelle Heizung des Filtermittels möglich, so dass bereits abgeschiedenes Polymermaterial schnell und effektiv wieder in die Schmelze rückgeführt werden kann was wiederum eine Entblockung des Filtermittels mit sich bringt. Dadurch ist die Vorrichtung im Vergleich zu herkömmlichen Vorrichtungen sehr wartungsarm.

Durch diese Ausgestaltung erfolgt die Temperaturerhöhung nur ortsgebunden im Bereich des Filtermittels, so dass der zusätzliche Gesamtenergieeintrag in die Polymerschmelze, der für eine Entblockung des Filtermittels nötig, minimiert werden kann. Da-durch kann eine Überhitzung der Polymerschmelze verhindert werden, und so ein Abbau der Polymerketten verhindert bzw. deutlich reduziert werden. Somit kann eine hohe Qualität des resultierenden Polymerprodukts gewährleistet werden.

Dies ist insbesondere bei Polyethylenterephtalat wichtig, da dort eine Erhöhung der Temperatur der PET-Schmelze über einen längeren Zeitraum auf 300 °C bis 350 °C, die nötig ist, um das Filtermittel zu entblocken, unerwünschte Abbaureaktionen mit sich bringt, wie z. B. eine Verringerung der Kettenlänge, was wiederum einen unerwünschten Erniedrigung der intrinsischen Viskosität sowie das Entstehen von Acetaldehyd (AA) mit sich führt, und die Qualität des resultierenden Polymerrecyclats erniedrigt.

Das Filtermittel umfasst bevorzugt einen oder mehrere Partikelfilter, deren Maschenweiten im Bereich von 100 µm bis 1000 µm, bevorzugt im Bereich von 200 µm bis 500 µm, liegen. Durch eine solche Ausgestaltung können im Polymer vorhandene Fremdstoffe effektiv herausgefiltert werden.

Alternativ zu diesen Partikelfiltern, oder in Kombination dazu, umfasst das Filtermittel einen oder mehrere Mikrosiebe, deren Maschenweiten kleiner als die der Partikelfilter sind, und bevorzugt im Bereich von 10 µm bis 100 µm, besonders bevorzugt im Bereich von 20 µm bis 50 µm, liegen. Durch das Vorhandensein eines solchen Mikrosiebs können auch kleinere Fremdstoffe aus der Polymerschmelze effektiv gefiltert werden.

In einer bevorzugten Ausführungsform der Vorrichtung sind mehrere Partikelfilter und/oder die Mikrosiebe vorhanden, bevorzugt 4 oder mehr, insbesondere bevorzugt 8 oder mehr. Diese sind so angeordnet, dass die Größe der Maschenweiten der einzelnen Filter, bezogen auf die Flussrichtung der Polymerschmelze, fortlaufend kleiner wird. Durch das Vorhandensein einer solchen Anordnung lässt sich eine besonders effektive Filterwirkung erzielen, wobei die nach Größe gestaffelte Abtrennung der Fremdpartikel durch unterschiedliche Filter bzw. Mikrosiebe dazu führt, dass die Zeitdauer bis zur Verstopfung des Filtermittels mit den zu filternden Partikeln weiter maximiert werden kann.

Bevorzugt weist jeder der Partikelfilter und/oder jedes der Mikrosiebe eine separate Heizeinheit auf. Dadurch ist durch eine gezielte Temperaturerhöhung nur einzelner der Partikelfilter und/oder Mikrosiebe ein besonders effektiver Reinigungsprozess der einzelnen Partikelfilter und/oder Mikrosiebe, die in dem Filtermittel vorhanden sind, möglich.

In einer weiteren bevorzugten Ausführungsform umfasst das Mittel zur Herstellung und Beförderung der Polymerschmelze mindestens einen Sensor zur Bestimmung des Massedrucks und/oder der Temperatur der Polymerschmelze. Dieser Sensor kann vor oder/und nach dem Filtermittel, bezogen auf die Flussrichtung der Polymerschmelze, angeordnet sein. In dieser Ausführungsform ist es zusätzlich bevorzugt, dass die Vorrichtung eine Regelungseinheit umfasst, die über die ermittelten Daten des Sensors die zweite Heizeinheit des Filtermittels ansteuert. Dadurch lässt sich die zweite Heizeinheit besonders effektiv betreiben, so dass der benötigte Temperatureintrag zur Reinigung des Filtermittels weiter minimiert werden kann, was eine zusätzlich erhöhte Qualität des Polymerprodukts mit sich führt. Weiterhin ist dadurch möglich, die Temperatur der Polymerschmelze beim Austritt aus dem Filter in Relation zum Schmelzpunkt des Polymers zu stellen, um die nachfolgenden Kühl- und Kristallisationsprozesse nicht zu behindern.

Die Erfindung und ihre Vorteile werden anhand der in den nachfolgenden Zeichnungen dargestellten Ausführungsbeispiele weiter erklärt. Dabei zeigen:
Fig. 1 eine schematische Schnittzeichnung einer Vorrichtung zur Durchführung des erfindungsgemäßen Verfahrens;
Fig. 2 eine vergrößerte Schnittdarstellung einer bevorzugten Ausführungsform des Filtermittels;
Fig. 3 eine bevorzugte Ausführungsform eines Partikelfilters bzw. Mikrosiebs;
Fig. 4 eine weitere bevorzugte Ausführungsform eines Partikelfilters bzw. Mikrosiebs; und
Fig. 5 eine schematische Darstellung einer bevorzugten Ausführungsform der Vorrichtung mit einer Regelvorrichtung.

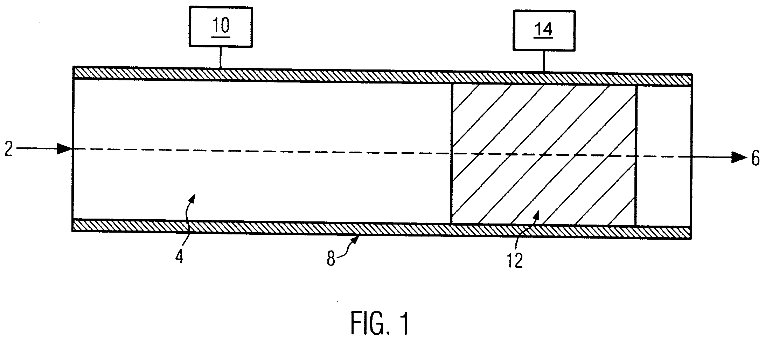

Fig. 1 zeigt schematisch eine Vorrichtung zur Reinigung von thermoplastischen Polymeren, umfassend ein Mittel 8 zur Herstellung und Beförderung einer Polymerschmelze 4, worin sich die Polymerschmelze 4 befindet. Das Mittel 8 weist eine erste Heizeinheit 10 zur Erhitzung der in Pfeilrichtung 2 durchfließenden Polymerschmelze 4 auf. Innerhalb des Mittels 8 befindet sich weiter ein Filtermittel 12, das eine zweite, separate Heizeinheit 14 umfasst, mit der die Temperatur des Filters unabhängig von der Polymerschmelzetemperatur eingestellt werden kann.

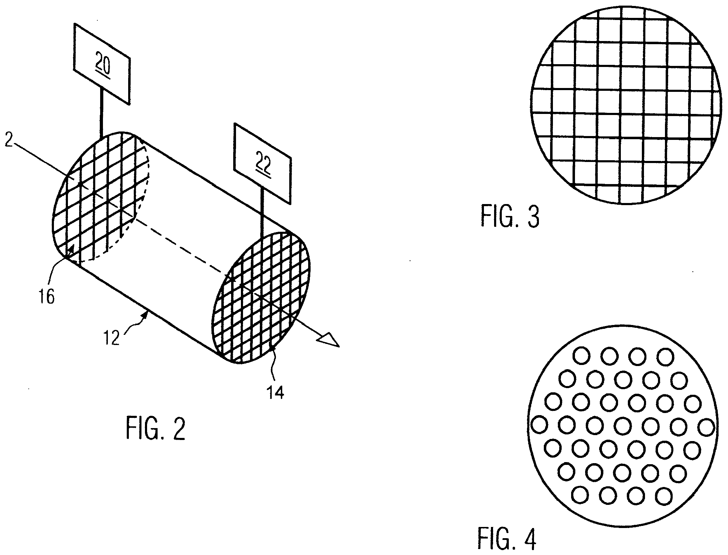

Fig. 2 zeigt eine bevorzugte Ausführungsform des Filtermittels 12. In dieser Ausgestaltung umfasst das Filtermittel einen Partikelfilter 16 und ein Mikrosieb 18 in einer Anordnung, bei der die Polymerschmelze zunächst den Partikelfilter 16 und anschließend das Mikrosieb 18 passiert. Weiter besitzen der Partikelfilter 16 und das Mikrosieb 18 jeweils eine separate Heizeinheit 20 bzw. 22, die zur separaten Einstellung der Temperaturen des Partikelfilters 16 sowie des Mikrosiebs 18 dienen. Die Ausgestaltung der Partikelfilter und der Mikrosiebe ist frei wählbar, insbesondere bevorzugt sind Gitterfilter sowie Lochbleche aus Edelstahl gemäß den Fig. 3 und 4.

Die Position des Filtermittels 12 im Mittel zur Herstellung und Beförderung der Polymerschmelze 4 ist frei wählbar, bevorzugt ist aber eine Position am hinteren Ende, bezogen auf die Austrittsrichtung der Polymerschmelze, so dass eine ausreichende Erhitzung auf die gewünschte Temperatur der Polymerschmelze gewährleistet ist. Insbesondere bevorzugt ist eine rohrförmige Ausgestaltung des Mittels 8 zur Herstellung und Beförderung der Polymerschmelze, z. B. in der Form eines Einschnecken- oder Doppelschneckenextruders.

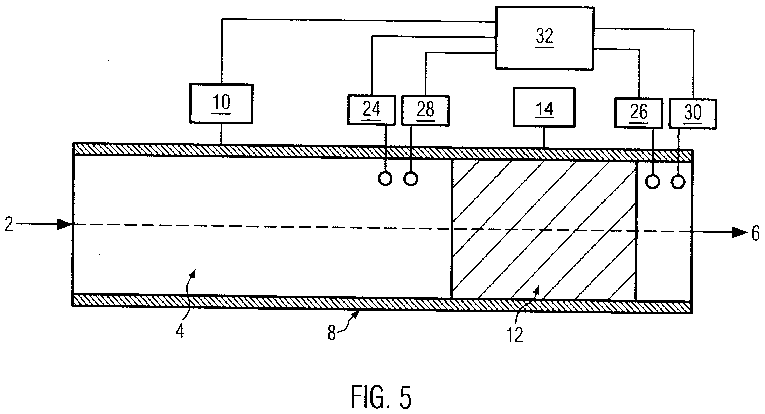

Fig. 5 zeigt eine bevorzugte Ausgestaltung der Vorrichtung, die einen Sensor 24 zur Bestimmung des Massedrucks vor dem Filtermittel 12, einen Sensor 26 zur Bestimmung des Massedrucks nach dem Filtermittel 12, einen Sensor 28 zur Bestimmung der Temperatur der Polymerschmelze 4 vor dem Filtermittel 12, sowie einen Sensor 30 zur Bestimmung der Temperatur der Polymerschmelze 4 nach dem Filtermittel 12 umfasst. Die Bezeichnungen "vor/nach" beziehen sich auf die Flussrichtung der Polymerschmelze 4, d. h. vom Ort des Eintrags des Polymeredukts 2 in Richtung des Orts des Austrags des Polymerprodukts 6. Die Sensoren 24, 26, 28 und 30 sind mit einer Regeleinheit 32 verbunden, die die Temperatur der zweiten Heizeinheit 18 regelt. Weiter ist eine Regelung der ersten Heizeinheit 10 möglich.

Mit der Vorrichtung gemäß Fig. 1 kann das erfindungsgemäße Verfahren wie folgt durchgeführt werden:
In das Mittel 8 zur Herstellung und Beförderung der Polymerschmelze 4 wird das Polymerprodukt, zum Beispiel in der Form von Polymerflakes, in Pfeilrichtung 2 eingebracht und in Richtung des Ortes des Austrags des Polymerprodukts 6 befördert. Über die erste Heizeinheit 10 erfolgt eine Erhöhung der Temperatur des eingebrachten Polymeredukts, was zu einer Bildung der Polymerschmelze 4 führt. Diese wird dann mittels des Filtermittels 12 filtriert, um Fremdstoffpartikel abzutrennen. Das Filtermittel 12 wird mittels der zweiten Heizeinheit 18 zeitweise auf eine Temperatur erhitzt, die höher als die der Polymerschmelze 4 ist. Erfindungsgemäss erfolgt das Erhitzen des Filtermittels 12 auf eine Temperatur, die höher als die der Polymerschmelze 4 ist, nur über eine begrenzte Zeitdauer, und bevorzugt intervallweise.

Über das Erhitzen des Filtermittels 12 wird vermieden, dass sich Bestandteile der Polymerschmelze 4 im Filtermittel 12 abscheiden, bzw. es werden schon abgeschiedene Polymerbestandteile wieder in die Schmelze zurückgeführt. Durch den direkten und zielgenauen zusätzlichen Temperatureintrag direkt am Filtermittel 12 kann die unerwünschte Temperaturerhöhung der Polymerschmelze 4 derart verringert werden, dass kein unerwünschter Abbau des Polymerprodukts 6 resultiert und so eine hohe Qualität des Produkts gewährleistet werden.

Gemäß Fig. 2 umfasst in einer bevorzugten Ausgestaltung des Verfahrens das Filtermittel 12 einen Partikelfilter 16 und ein separates Mikrosieb 18, das, bezogen auf die Flussrichtung der Polymerschmelze 4 nachgeschaltet ist. Der Partikelfilter 16 und das Mikrosieb 18 haben jeweils eine separate Heizeinheit 20 bzw. 22, mit denen die Temperaturen des Partikelfilters 16 und die des Mikrosiebs 18 getrennt voneinander eingestellt werden, und gleich oder verschieden sein können. In einer bevorzugten Ausgestaltung ist die Temperatur des Mikrosiebs 18 höher als die des Partikelfilters 16, da durch die geringere Maschenweite des Mikrosiebs 18 dort die Gefahr des Verblockens des Siebs größer ist als die des Partikelfilters 16, der eine größere Maschenweite aufweist. Durch diese bevorzugte Anordnung kann der benötigte Energieeintrag zum Reinigen des Filtermittels 12 weiter minimiert werden, und somit die Qualität des Polymerprodukts 6 zusätzlich erhöht werden.

In der erfindungsgemässen Verfahrensführung erfolgt das Erhitzen des Filtermittels 12 auf eine Temperatur, die höher als die der Polymerschmelze 4 ist, nur über eine begrenzte Zeitdauer, d. h. nicht kontinuierlich. Für die Zeit, in der die Temperatur des Filtermittels 12 nicht höher als die der Polymerschmelze 4 ist, wird bevorzugt die Temperatur des Filtermittels 12 auf die Temperatur der Polymerschmelze 4 eingestellt, so dass keine Abkühlung der Polymerschmelze 4 durch das Filtermittel 12 erfolgt. Über das Erhitzen des Filtermittels 12 nur über eine begrenzte Zeitdauer auf eine höhere Temperatur als die der Polymerschmelze 4, kann der benötigte zusätzliche Temperatureintrag, d. h. die thermische Belastung des Polymermaterials zusätzlich verringert werden. Weiter ist bevorzugt, das Erhitzen des Filtermittels 12 intervallweise durchzuführen, so dass, bei einer Gefahr des Verblockens des Filtermittels durch hochmolekulare Bestandteile der Polymerschmelze, diese rechtzeitig wieder entfernt werden können. Die Zeitdauer des Erhitzens des Filtermittels, sowie die Heizintervalle sind entsprechend den Rahmenbedingungen wie oben definiert wählbar.

Insbesondere ist gemäß einer besonders bevorzugten Ausführungsform des Verfahrens, wie in Fig. 5 dargestellt, ein Schritt des Regelns der Temperatur und/oder der Heizdauer und/oder des Heizintervalls des Filtermittels 12 umfasst. Dabei werden ein oder mehrere Regelparameter wie z.B. die Temperatur der Polymerschmelze 4 vor dem Filterschritt, die Temperatur der Polymerschmelze 4 nach dem Filterschritt, der Massedruck der Polymerschmelze 4 vor dem Filterschritt, und der Massedruck der Polymerschmelze 4 nach dem Filterschritt über die Sensoren 24, 26, 28 und 30 gemessen. Diese Messgrößen stellen die Regelparameter dar, die in der Regeleinheit 32 verarbeitet werden, so dass die Temperatur des Filtermittels 12 über die zweite Heizeinheit 18 geregelt werden kann. Alternativ oder zusätzlich kann auch über die erste Heizeinheit 10 die Temperatur der Polymerschmelze 4 geregelt werden. Über einen solchen Regelmechanismus ist eine besonders effektive Verfahrensführung möglich, da die Temperatur der Filtereinheit 12 direkt schnell und besonders zielgerichtet eingestellt werden kann.

## Patentansprüche

1. Verfahren zur Reinigung von thermoplastischen Polymeren, umfassend einen Schritt des Filtrierens einer Polymerschmelze (4) mit einem Filtermittel (12), **dadurch gekennzeichnet, dass** das Filtermittel (12) zeitweise auf eine Temperatur erhitzt wird, die höher als die der Polymerschmelze (4) ist, wobei das Erhitzen des Filtermittels (12) nur über eine begrenzte Zeitdauer durchgeführt wird, so dass das Filtermittel (12) nicht permanent auf eine Temperatur erhitzt wird, die höher ist als die der Polymerschmelze (4).

2. Verfahren nach Anspruch 1, **dadurch gekennzeichnet, dass** die Differenz der Temperatur der Polymerschmelze (4) zu der Temperatur des Filtermittels (12) im Bereich von 110 °C bis 40 °C, bevorzugt von 90 °C bis 50 °C, liegt.

3. Verfahren nach Anspruch1 oder 2, **dadurch gekennzeichnet, dass** die Temperatur der Polymerschmelze (4) im Bereich von 250 °C bis 300 °C, bevorzugt von 270 °C bis 290 °C, liegt, und das Filtermittel (12) auf eine Temperatur im Bereich von 300 °C bis 360 °C, bevorzugt von 320 °C bis 350 °C, erhitzt wird.

4. Verfahren nach Anspruch 1 bis 3, **dadurch gekennzeichnet, dass** der Massedruck der Polymerschmelze (4) vor dem Filterschritt weniger als 150 bar, bevorzugt weniger als 125 bar, besonders bevorzugt weniger als 100 bar, beträgt.

5. Verfahren nach Anspruch 1 bis 4, **dadurch gekennzeichnet, dass** das Erhitzen des Filtermittels (12) auf eine Temperatur, die höher als die der Polymerschmelze (4) ist, intervallweise, durchgeführt wird.

6. Verfahren nach Anspruch 5, **dadurch gekennzeichnet, dass** die Zeitdauer des Erhitzens des Filtermittels (12) auf eine Temperatur, die höher als die der Polymerschmelze (4) ist, weniger als 30 min, bevorzugt weniger als 10 min, besonders bevorzugt weniger als 2 min, beträgt.

7. Verfahren nach Anspruch 5 oder 6, **dadurch gekennzeichnet, dass** die Heizintervalle mehr als 1 h, bevorzugt mehr als 5 h, besonders bevorzugt mehr als 10 h, betragen.

8. Verfahren nach Anspruch 1 bis 7, **dadurch gekennzeichnet, dass** das Verfahren einen Schritt des Regelns der Temperatur und/oder der Heizdauer und/oder des Heizintervalls des Filtermittels (12) umfasst, wobei der Regelparameter mindestens einer, ausgewählt aus der Gruppe, umfassend die Temperatur der Polymerschmelze (4) vor dem Filterschritt, die Temperatur der Polymerschmelze (4) nach dem Filterschritt, den Massedruck der Polymerschmelze (4) vor dem Filterschritt, und den Massedruck der Polymerschmelze (4) nach dem Filterschritt, ist.

9. Verfahren nach Anspruch 1 bis 8, **dadurch gekennzeichnet, dass** die Temperatur des Filtermittels (12) während des Verfahrens geregelt wird, wobei der Regelparameter mindestens einer, ausgewählt aus der Gruppe, umfassend die Schmelz- und/oder Glasübergangstemperatur des Polymeredukts (2), die intrinsische Viskosität des Polymeredukts (2), die Schmelz- und/oder Glasübergangstemperatur des Polymerprodukts (6), und die intrinsische Viskosität des Polymerprodukts (6), ist.

## Claims

1. Method for purifying thermoplastic polymers, said method comprising a step of filtering a polymer melt (4) by way of a filter means (12), **characterized in that** the filter means (12) is heated temporarily to a temperature, which is higher than that of the polymer melt (4), wherein the heating of the filter means (12) is performed only over a limited time period, so that the filter means (12) is heated not permanently to a temperature, which is higher than that of the polymer melt (4).

2. Method according to claim 1, **characterized in that** the difference of the temperature of the polymer melt (4) with respect to the temperature of the filter means (12) lies in the range of 110°C to 40°C, preferably 90°C to 50°C.

3. Method according to claim 1 or 2, **characterized in that** the temperature of the polymer melt (4) lies in the range of 250°C to 300°C, preferably 270°C to 290°C, and the filter means (12) is heated to a temperature in the range of 300°C to 360°C, preferably 320°C to 350°C.

4. Method according to claims 1 to 3, **characterized in that** the melt pressure of the polymer melt (4) before the filtering step is less than 150 bar, preferably less than 125 bar, particularly preferred less than 100 bar.

5. Method according to claims 1 to 4, **characterized in that** the heating of the filter means (12) to a temperature which is higher than that of the polymer melt (4) is performed in intervals.

6. Method according to claim 5, **characterized in that** the time period for heating the filter means (12) to a temperature which is higher than that of the polymer melt (4) is less than 30 min, preferably less than 10 min, particularly preferred less than 2 min.

7. Method according to claim 5 or 6, **characterized in that** the heating intervals last more than 1 h, preferably more than 5 h, particularly preferred more than 10 h.

8. Method according to claims 1 to 7, **characterized in that** said method comprises a step of controlling the temperature and/or the heating time and/or the heating interval of the filter means (12), the control parameter being at least one selected from the group comprising the temperature of the polymer melt (4) before the filtering step, the temperature of the polymer melt (4) after the filtering step, the melt pressure of the polymer melt (4) before the filtering step, and the melt pressure of the polymer melt (4) after the filtering step.

9. Method according to claims 1 to 8, **characterized in that** the temperature of the filter means (12) is controlled during the process, the control parameter being at least one selected from the group comprising the melting temperature and/or glass transition temperature of the polymer reactant (2), the intrinsic viscosity of the polymer reactant (2), the melting temperature and/or glass transition temperature of the polymer product (6), and the intrinsic viscosity of the polymer product (6).

## Revendications

1. Procédé de purification de polymères thermoplastiques, comprenant une étape de filtrage d'une masse fondue de polymère (4) à l'aide d'un moyen de filtrage (12), **caractérisé en ce que** le moyen de filtrage (12) est échauffé temporairement à une température qui est plus élevée que celle de la masse fondue de polymère (4), l'échauffement du moyen de filtrage (12) n'étant effectué que pendant une durée limitée, de sorte que le moyen de filtrage (12) n'est pas échauffé en permanence à une température qui est plus élevée que celle de la masse fondue de polymère (4).

2. Procédé selon la revendication 1, **caractérisé en ce que** la différence de la température de la masse fondue de polymère (4) par rapport à la température du moyen de filtrage (12) se situe dans une plage de 110°C à 40°C, de préférence de 90°C à 50°C.

3. Procédé selon la revendication 1 ou la revendication 2, **caractérisé en ce que** la température de la masse fondue de polymère (4) se situe dans une plage de 250°C à 300°C, de préférence de 270°C à 290°C, et le moyen de filtrage (12) est échauffé à une température se situant dans une plage de 300°C à 360°C, de préférence de 320°C à 350°C.

4. Procédé selon les revendications 1 à 3, **caractérisé en ce que** la pression de masse de la masse fondue de polymère (4) avant l'étape de filtrage est de moins de 150 bar, de préférence de moins de 125 bar, et de manière particulièrement préférée de moins de 100 bar.

5. Procédé selon les revendications 1 à 4, **caractérisé en ce que** l'échauffement du moyen de filtrage (12) à une température qui est plus élevée que celle de la masse fondue de polymère (4), est effectué par intervalles.

6. Procédé selon la revendication 5, **caractérisé en ce que** la durée de l'échauffement du moyen de filtrage (12) à une température qui est plus élevée que celle de la masse fondue de polymère (4), vaut moins de 30 min, de préférence moins de 10 min, et de manière particulièrement préférée de moins de 2 min.

7. Procédé selon la revendication 5 ou la revendication 6, **caractérisé en ce que** les intervalles de chauffe ont une valeur de plus de 1h, de préférence de plus de 5h, et de manière particulièrement préférée de plus de 10h.

8. Procédé selon les revendications 1 à 7, **caractérisé en ce que** le procédé comprend une étape de régulation de la température et/ou de la durée de chauffe et/ou de l'intervalle de chauffe du moyen de filtrage (12), le paramètre de régulation étant l'un au moins, sélectionné, parmi ceux du groupe comprenant la température de la masse fondue de polymère (4) avant l'étape de filtrage, la température de la masse fondue de polymère (4) après l'étape de filtrage, la pression de masse de la masse fondue de polymère (4) avant l'étape de filtrage, et la pression de masse de la masse fondue de polymère (4) après l'étape de filtrage.

9. Procédé selon les revendications 1 à 8, **caractérisé en ce que** la température du moyen de filtrage (12) est régulée pendant le procédé, le paramètre de régulation étant l'un au moins, sélectionné, parmi ceux du groupe comprenant la température de fusion et/ou la température de transition vitreuse du matériau polymère initial (2), la viscosité intrinsèque du matériau polymère initial (2), la température de fusion et/ou la température de transition vitreuse du matériau polymère produit (6), et la viscosité intrinsèque du matériau polymère produit (6).
